# EUROPEAN PATENT SPECIFICATION

(11) **EP 2 273 233 B1**
(45) Date of publication and mention of the grant of the patent: **30.08.2017**
(21) Application number: 10167360.6
(22) Date of filing: 25.06.2010
(51) Int. Cl.: G01C 21/26, B60K 31/00, B60T 7/12

(54) **Reliability evaluation device, reliability evaluation method, and reliability evaluation program**
Vorrichtung und Verfahren zur Zuverlässigkeitsbewertung und Computerprogrammprodukt
Dispositif d'évaluation de la fiabilité, procédé d'évaluation de la fiabilité et programme d'évaluation de la fiabilité

(30) Priority: 10.07.2009 JP 2009163860
(43) Date of publication of application: 12.01.2011
(73) Proprietor: AISIN AW CO., LTD., Anjo-shi, Aichi 444-1192 (JP)
(72) Inventor: Miyajima, Takayuki, Anjo-shi Aichi 444-1192 (JP); Kanba, Motoki, Anjo-shi Aichi 444-1192 (JP)
(74) Representative: Kramer Barske Schmidtchen Patentanwälte PartG mbB

(56) References cited:
- EP-A1- 1 734 492
- WO-A2-2004/059900
- JP-A- 2006 218 950
- US-A1- 2004 085 201
- US-A1- 2006 233 425
- US-A1- 2006 293 844
- US-A1- 2007 299 606

## Description

The present invention relates to a reliability evaluation device, a reliability evaluation method, and a reliability evaluation program which evaluate the reliability of map information.

Known related art (JP-A-2006-218950, for example) determines whether an erroneous control has been performed by calculating a road curvature radius based on vehicle behavior and comparing the calculated radius with a curvature radius specified in map information. If an erroneous control was performed, such art then ensures that a corner control that referenced the map information is subsequently not performed. Art that calculates the reliability of map information is also known (JP-A-2007-225498, for example).

The related art is not capable of evaluating reliability based on a distribution property of a measurement value when a position of a feature or the like specified in map information is measured.

In other words, a curvature, a start position, and the like of a curve segment can be actually measured based on output signals from various types of sensors, such as an acceleration sensor and a position sensor (GPS or the like) installed in a vehicle. If the various sensors measure various measurement objects a plurality of times, the measurement values take on a wide variety of distribution properties, but the reliability of measurement values with different distribution properties cannot be evaluated using the same evaluation process. For example, a different index should be used for determining whether a measurement value is reliable when a specific value from a distribution of the measurement value is assumed as the correct value, and when the correct value cannot be assumed but the measurement value is distributed within an allowable margin of error. As described above, the same evaluation process cannot be used to evaluate the reliability of measurement values having different distribution properties. Even comparing a value identified by vehicle behavior and a value specified in map information according to the related art cannot accurately identify the reliability of various types of information included in map information.

US 2007/0299606 A1 discloses a driving assistance system to perform a driving assistance application for a control target in a subject vehicle using map data for a map surrounding the subject vehicle wherein a map reliability degree is, inter alias, computed by positioning accuracy information included in the map data.

US 2006/0293844 A1 discloses a vehicle controller, wherein a false map matching possibility is detected by calculating the similarity of two outbound roads from a junction.

US 2004/0085201 A1 discloses a method for controlling light beams of a vehicle, wherein the reliability rate of navigation data is taken into account to determine the command to be applied to the lighting apparatus. The determination of the reliability rate is made by a comparison of the navigation information with vehicle sensor data, for example,

US 2006/0233425 A1 discloses an image processor for an automotive vehicle, wherein a degree of reliability of a detection of a traffic lane line is calculated on the basis of the distance distribution of the edge intensity of the traffic lane line.

US 2007/0299606 A1 discloses a driving assistance system wherein a map reliability degree indicating an accuracy of map data is computed and a driving assistance application is executed based on an operation associated with the computed map reliability degree.

The present invention was devised in light of the above problems, and evaluates reliability depending on a distribution property of a measurement value when measuring a position of a feature or the like specified in map information. This object is achieved by a reliability evaluation device according to claim 1, a reliability evaluation method according to claim 9 and a reliability evaluation program according to claim 14. Further developments are given in the dependent claims.

According to a first aspect, the measurement value for measuring the evaluation object is acquired a plurality of times using the sensor installed in the vehicle, and a reliability evaluation process (evaluation object value reliability evaluation process) is selected depending on a dispersion of the measurement value. The reliability of the evaluation object value is then evaluated using the selected reliability evaluation process. Specifically, a plurality of reliability evaluation processes that correspond to the measurement value dispersion is prepared in advance, and the reliability evaluation process is selected depending on the measurement value dispersion. In these reliability evaluation processes, the reliability of the evaluation object value, which specifies a position of a feature or the like specified in the map information, is evaluated based on the measurement value of a sensor installed in the vehicle. Since the measurement value dispersion expresses a spreading property of the distribution for an average value in the measurement value distribution, the measurement value dispersion is an index that indicates whether a specific measurement value can be assumed from the distribution. The reliability of an evaluation object value is thus evaluated using a reliability evaluation process that is selected depending on the measurement value dispersion. Therefore, when the position of a feature or the like specified in map information is measured, the reliability can be evaluated based on the distribution property of the measurement value.

The evaluation object value acquisition unit may extract any evaluation object value from a plurality of evaluation object values included in the map information as the evaluation object. The evaluation object value is a value that can be measured by a sensor installed in the vehicle, and is also information that is stored in a storage medium in advance as part of the map information. Thus, the evaluation object value is not limited provided that it is a value pertaining to a feature or the like that forms the map information. The evaluation object value may identify a position or curvature of a feature or the like, or a size or amount such as a road width. The evaluation object value may also express a specific meaning such as a flag that indicates the existence of a feature.

The measurement value acquisition unit is not limited provided that it can acquire the measurement value a plurality of times. The measurement value is not limited provided that it is a value for measuring the evaluation object value. In other words, the measurement value and the evaluation object value are values that can be directly compared. If an output value of the sensor employs the same system of units as the evaluation object value, the sensor output value may be used as the measurement value that measured the evaluation object, and a comparison is made of the output value and the evaluation object value. If the sensor output value employs a different system of units, one of the output value and the evaluation object value is converted to match the other. The sensor is not limited provided that it is installed in the vehicle and can output a measurement value for measuring an evaluation object that forms the map information, or a value that may be converted into the measurement value. Thus, in addition to sensors that measure physical amounts such as position, speed, acceleration and the like, a camera or the like for measuring the position, speed, acceleration and the like of the vehicle or a feature on the road through image analysis also corresponds to the sensor of the present invention.

The reliability evaluation unit is not limited provided that it selects the reliability evaluation process depending on the measurement value dispersion, and evaluates the reliability of the evaluation object value based on the measurement value. Obviously, the dispersion may be directly specified by acquiring the measurement value a plurality of times and actually computing the dispersion.

The selection of the reliability evaluation process depending on the dispersion is not limited provided that a configuration is used such that the reliability evaluation process is selected depending on a characteristic of the evaluation object that corresponds to the measurement value dispersion. Specifically, the evaluation object has a characteristic such that the smaller the measurement value dispersion, the more stably the measurement value can be measured. If the measurement value can be stably measured, the accuracy of the evaluation object itself can be evaluated based on the measurement value. Thus, if the measurement value dispersion is small, a configuration may be used that selects the reliability evaluation process for evaluating reliability depending on the accuracy of the evaluation object, for example. Meanwhile, an evaluation object having a larger measurement value dispersion is accompanied by a wider measurement value distribution range. Thus, if the measurement value dispersion is large, instead of depending on the measurement value, a configuration may be used that selects the reliability evaluation process for evaluating reliability depending on the measurement probability of measuring a measurement value within a set of measurement values, e.g. within a specific range.

The reliability of the evaluation object value is not limited provided that it is defined such that a higher reliability means a smaller negative effect on the vehicle when the evaluation object value is used in a vehicle control. For example, a configuration may be used that considers the evaluation object value that includes a margin of error as the correct value and evaluates reliability depending on the magnitude of the effect on driving when the vehicle control is performed. The reliability of the evaluation object value is not limited provided that it is evaluated based on the measurement value. A configuration that specifies a value or the like computed from the measurement value, a value obtained by converting the measurement value, or a plurality of measurement values, and analyzes a distribution of the specified value, and a configuration that compares the specified value with the evaluation object value may be used.

As a specific example of the configuration of the reliability evaluation process, the reliability evaluation process may be defined such that the reliability is evaluated by referencing the measurement value whose difference with the evaluation object value is within a predetermined threshold, and mutually different predetermined thresholds defined for a plurality of reliability evaluation processes. According to this configuration, by selecting the reliability evaluation process depending on the measurement value dispersion, the predetermined threshold is selected depending on the measurement value dispersion to evaluate reliability.

Specifically, for a small dispersion, the measurement values are distributed in a relatively narrow range when the measurement values are obtained a plurality of times, whereas for a large dispersion, the measurement values are distributed in a relatively wide range when the measurement values are obtained a plurality of times. Therefore, a narrow range may be used as the analysis object in the case of the former, and a wide range may be used as the analysis object in the case of the latter. Therefore, by selecting the reliability evaluation process such that a different threshold is used depending on the measurement value dispersion, the predetermined threshold is selected with the measurement values of a suitable range depending on the measurement value dispersion used as the analysis object.

If a configuration is used that selects the reliability evaluation process for evaluating the reliability by referencing the measurement value in a narrower range for a smaller measurement value dispersion, it is possible to evaluate reliability by referencing the measurement value of a relatively narrow range when the reliability of the evaluation object value can be evaluated using the measurement value of a narrow range having a small dispersion. Meanwhile, when the distribution of the measurement value in a specific range expresses a property of the measurement object, it is possible to evaluate reliability by referencing the measurement value of a relatively wide range. Therefore, the reliability of the evaluation object value is evaluated using the reliability evaluation process depending on the measurement value dispersion.

A configuration may be used that evaluates reliability based on a probability of measuring the measurement value. In other words, the probability of repeatedly measuring a specific measurement value indicates reproducibility and accuracy when measuring the specific measurement value. Hence, focusing on the measurement value with the highest probability of being measured, it is possible to assume that the measurement value with the highest probability of being measured is a value that measures the evaluation object value. In the case of such an assumption, the measurement value is near the evaluation object value, and a higher measurement probability of the measurement value means that the evaluation object value is closer to the precise value of the evaluation object. Thus, the reliability of the evaluation object value can be evaluated using a range that includes the measurement value with the highest probability of being measured and the measurement probability of the measurement value. Hence, if a first range is defined as a range for determining whether the measurement is near the evaluation object value and the highest measurement probability is used as a first probability, the reliability evaluation process can be defined as evaluating the reliability of the evaluation object value based on the measurement value acquired a plurality of times.

Meanwhile, a probability of measuring the measurement value within a specific range indicates a probability that the measurement value is included within the specific range when the measurement value is acquired a plurality of times, and is an index that indicates whether the measurement value within the specific range is stably measured. Therefore, if an error range allowed for the evaluation object value is used as the specific range, the reliability of the evaluation object value can be evaluated using the probability of measuring the measurement value within the specific range. Hence, if the error range allowed for the evaluation object value is defined as a second range, the reliability evaluation process can be defined as evaluating the reliability of the evaluation object value based on the measurement value acquired a plurality of times.

By defining the reliability evaluation processes as described above, the reliability process can be selected depending on the measurement value dispersion. In other words, the measurement value dispersion is a distribution property when the measurement value is acquired a plurality of times, and among distribution properties characterizing the distribution of the measurement value, the measurement value dispersion is also a distribution property that is closely related to the reliability of the measurement value. Thus, by selecting the reliability evaluation process corresponding to the dispersion, reliability can be evaluated based on the distribution property of the measurement value when a position of a feature or the like specified in map information is measured. For an evaluation object for which the measurement value dispersion is small, a configuration may be used that selects the reliability evaluation process for evaluating reliability based on the first probability, which is a probability of measuring the measurement value with the highest probability of being measured, if the measurement value with the highest probability of being measured exists within the first range from the evaluation object value. For an evaluation object for which the measurement value dispersion is large, a configuration may be used that selects the reliability evaluation process for evaluating reliability based on the second probability, which is a probability of measuring the measurement value within the second range that includes the evaluation object value.

Further, the reliability evaluation process may be defined as evaluating reliability based on a difference between the measurement value with the highest probability of being measured and the evaluation object value, for example. In such case, the reliability of the evaluation object value can be evaluated on the assumption that the measurement value with the highest probability of being measured is the actual measurement value of the evaluation object. In other words, if the measurement value is a value that actually measures the evaluation object using a sensor of the vehicle, the evaluation object value included in the map information and the measurement value can be directly compared to evaluate the reliability of the evaluation object value. Note that, because the difference between the measurement value with the highest probability of being measured and the evaluation object value corresponds to reliability, various configurations are possible, including a configuration that compares the difference and a threshold and evaluates the reliability as low when the difference exceeds the threshold, and a configuration that evaluates reliability by associating the magnitude of difference and reliability.

The probability of measuring the measurement value in a range where the difference between the measurement value and the evaluation object value is equal to or greater than a predetermined value serves as an index that evaluates the proportion of measurement values separate from the evaluation object value by at least a predetermined value, i.e., measurement values that lower the reliability of the evaluation object value, measured. Hence, the reliability evaluation process may be defined as evaluating reliability based on the probability of measuring the measurement value in a range where the difference between the measurement value and the evaluation object value is equal to or greater than a predetermined value. In such case, the reliability of the evaluation object value can be evaluated based on the measurement probability of measurement values that lower the reliability of the evaluation object value. For example, a configuration may be used that defines the range where the difference between the evaluation object value and the measurement value is equal to or greater than a predetermined value as a range where the margin of error allowed for the evaluation object value is exceeded. Thus, the reliability of the evaluation target value is considered to be low if the probability of measuring the measurement value in a range where the difference between the measurement value and the evaluation object value is equal to or greater than a predetermined value is at least a predetermined probability.

In addition, the measurement value dispersion may be defined based on various indices. For example, a configuration may be used in which the measurement value dispersion when a sensor that measures an operation of a driver of the vehicle is not included as a sensor that acquires the measurement value is considered to be smaller than the measurement value dispersion when a sensor that measures an operation of the driver of the vehicle is included. In other words, when a sensor that measures an operation of the driver of the vehicle is included as a sensor for acquiring the measurement value, conditions and the like during driving are reflected on the resulting measurement value acquired and the measurement value dispersion is generally large. Therefore, if the magnitude of dispersion is identified based on whether a sensor that measures an operation of the driver of the vehicle is included as a sensor for acquiring the measurement value, the dispersion can be determined without actually specifying the dispersion.

If the reliability of the evaluation object value is low, the dispersion is small, and the measurement probability of the measurement value with the highest probability of being measured is equal to or greater than a predetermined value, a value that specifies the evaluation object may be identified based on the measurement value with the highest probability of being measured, and the evaluation object value in the map information may be updated using the identified value. In other words, if the measurement value dispersion is small, the reliability of the value of the measurement value with the highest probability of being measured can be evaluated as high. Further, if the measurement probability of the measurement value with the highest probability of being measured is equal to or greater than a predetermined value, the measurement value with the highest probability of being measured is highly likely to be closer to the actual value of the evaluation object than the existing evaluation object value. Hence, if the reliability of the existing evaluation object value is evaluated as low, the reliability of the measurement value with the highest probability of being measured is considered to be high and used to update the existing evaluation object value. With this configuration, the reliability of the map information can be increased.

In addition, the reliability evaluation process for evaluating reliability is not limited provided that the reliability evaluation process is selected depending on the distribution property of the measurement value.

Further, the technique for selecting the reliability evaluation process depending on the measurement value dispersion and evaluating the reliability of the evaluation object value can also be applied in the forms of a program and a method. Moreover, the reliability evaluation device, the reliability evaluation program, and the reliability evaluation method as described above include various type of embodiments. The present invention may be implemented in a stand-alone device, and it may be implemented through parts used in common with respective components provided in the vehicle. For example, it is possible to provide a navigation device that is equipped with the reliability evaluation device described above, and to provide the reliability evaluation method and the reliability evaluation program as well. The present invention can also be modified as desired, such as by providing a portion of it in the form of software and a portion of it in the form of hardware, for example. The present invention may also be practiced in the form of a storage medium for a program that controls the reliability evaluation device. The software storage medium may be a magnetic storage medium or a magneto optical storage medium. Furthermore, any storage medium that is developed henceforth can also be considered to be exactly the same.

Further features follow from the description of embodiments referring to the drawings, from which:
FIG. 1 is a block diagram of a navigation device that includes a reliability evaluation device;
FIGS. 2A and 2B are drawings that show a frequency distribution of measurement values;
FIG. 3 is a flowchart of a vehicle control process; and
FIG. 4 is a drawing that shows an example of a curve segment.

Hereinafter, embodiments will be described in the order shown below.
(1) Configuration of Navigation Device
(2) Vehicle Control Process
(3) Other Embodiments

### (1) Configuration of Navigation Device

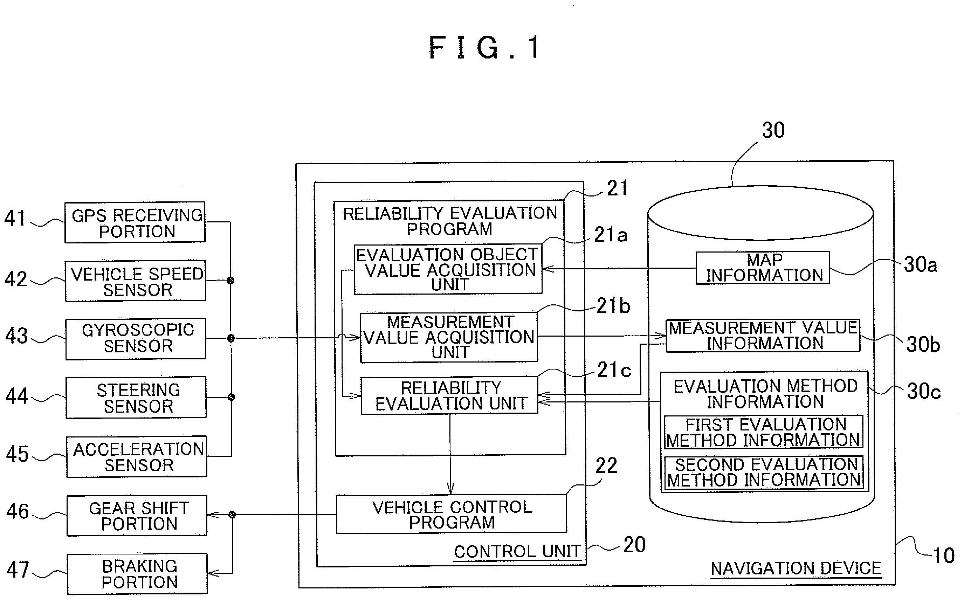

FIG. 1 is a block diagram that shows the configuration of a navigation device 10 that includes a reliability evaluation device. The navigation device 10 includes a storage medium 30 and a control unit 20 that includes a CPU, a RAM, a ROM, and the like. The control unit 20 can execute programs that are stored in the storage medium 30 and the ROM. In the present embodiment, a reliability evaluation program 21 and a vehicle control program 22 are such programs that may be executed by the control unit 20. The reliability evaluation program 21 has a function for evaluating the reliability of information included in map information 30a that is stored in the storage medium 30 of the navigation device 10, and updating information with low reliability. In the present embodiment, the vehicle control program 22 has a function for executing a vehicle control while varying a controlled variable of the vehicle control depending on the reliability of the map information 30a.

The map information 30a is used for identifying a vehicle position and providing vehicle route guidance. The map information 30a includes node data that indicate nodes that are set on the roads that the vehicle travels, shape interpolation data that indicates the shapes of the roads between the nodes, link data that indicate connections between the nodes; data that indicate the roads and the features around them, and the like. In the present embodiment, information that specifies curve segments formed in roads and information that specifies the start position and curvature of such curve segments is included in the map information 30a.

The vehicle in the present embodiment (the vehicle installed with the navigation device 10) includes a GPS receiving portion 41, a vehicle speed sensor 42, a gyroscopic sensor 43, a steering sensor 44, an acceleration sensor 45, a gear shift portion 46, and a braking portion 47. The functions of the reliability evaluation program 21 and the functions of the vehicle control program 22 are implemented by coordinated operation among the various portions and the control unit 20.

The GPS receiving portion 41 receives radio signals from GPS satellites and outputs, through an interface that is not shown in the drawing, information for computing a current position of the vehicle. The control unit 20 acquires the current position of the vehicle by receiving such information. The vehicle speed sensor 42 outputs a signal that corresponds to the rotational speed of a wheel of the vehicle. The control unit 20 acquires the speed of the vehicle by receiving the signal through an interface that is not shown in the drawing. The gyroscopic sensor 43 outputs a signal that corresponds to an angular velocity of the vehicle. The control unit 20 acquires the direction in which the vehicle is traveling by receiving the signal through an interface that is not shown in the drawing. The vehicle speed sensor 42 and the gyroscopic sensor 43 are used to correct the current position of the vehicle that is specified by the output signal from the GPS receiving portion 41. The current position of the vehicle is also corrected as necessary based on the driving path of the vehicle.

The steering sensor 44 outputs a signal that specifies a steering angle (a rotation angle from a steering wheel base condition (0 degrees)) of the vehicle. The control unit 20 receives the signal through an interface that is not shown in the drawing, and identifies the timing at which the driver performs a steering operation based on the signal that specifies the steering angle. The acceleration sensor 45 outputs a signal that corresponds to an acceleration of the vehicle. The control unit 20 acquires an acceleration having a component parallel to the lateral direction of the vehicle (lateral acceleration) by receiving the signal through an interface that is not shown in the drawing.

The gear shift portion 46 includes a stepped transmission with a torque converter that has a plurality of gear speeds, such as six forward speeds, one reverse speed, and the like. The gear shift portion 46 can transmit the driving force of an engine to the wheel of the vehicle while using the gear ratios that correspond to the various gear speeds to regulate the engine rotational speed. Through an interface that is not shown in the drawing, the control unit 20 outputs a control signal for switching the gear speed, and the gear shift portion 46 can receive the control signal and switch the gear speed. In the present embodiment, as the gear speed increases to a higher gear, such as from the first forward speed towards the sixth forward speed, the gear ratio becomes smaller.

The braking portion 47 includes a device that controls a wheel cylinder pressure, which regulates the degree of deceleration realized by brakes that are mounted in the vehicle wheels. The control unit 20 outputs a control signal to the braking portion 47 to regulate the wheel cylinder pressure. If the control unit 20 outputs a control signal to the braking portion 47 to increase the wheel cylinder pressure, the braking force of the brakes is increased and the vehicle is decelerated.

The control unit 20 executes the reliability evaluation program 21 to evaluate the reliability of information included in the map information 30a. For this purpose, the reliability evaluation program 21 has an evaluation object value acquisition unit 21a, a measurement value acquisition unit 21b, and a reliability evaluation unit 21c.

The evaluation object value acquisition unit 21a is a module that realizes in the control unit 20 a function for acquiring an evaluation object value whose reliability is to be evaluated from the map information 30a. In the present embodiment, the control unit 20 determines whether there is a curve segment within a predetermined range ahead of the current position of the vehicle, which is specified based on the output signals of the GPS receiving portion 41, the vehicle speed sensor 42, and the gyroscopic sensor 43. If it is determined that there is a curve segment within the predetermined range, the control unit 20 uses the processing of the evaluation object value acquisition unit 21 a to find as evaluation objects the curvature related to vehicle control in the curve segment and the start position of the curve segment, after which the values of the curvature and the start position of the curve segment are extracted from the map information 30a and set as evaluation object values. Note that various types of formats may be used for the evaluation object values included in the map information 30a. For example, in addition to a configuration that associates the curve segment and the curvature and stores them in the map information 30a, a configuration that extracts at least three shape interpolation points set on the road of the curve segment and calculates the curvature from the positions of these shape interpolation points may also be used.

The measurement value acquisition unit 21b is a module for realizing in the control unit 20 a function for acquiring a measurement value for measuring the evaluation object value a plurality of times using the sensors mounted in the vehicle. In the present embodiment, if the sensor output values employ the same system of units as the evaluation object value, the sensor output values are used as the measurement value; if the sensor output values and the evaluation object value employ different systems of units, one is converted to match the other. Specifically, if it is determined that there is a curve segment within a predetermined range ahead of the current position of the vehicle, the control unit 20 uses the processing of the measurement value acquisition unit 21b to acquire the output signal of the steering sensor 44 and identify the timing at which the driver performs a steering operation. The vehicle position at such timing is identified by the output signals of the GPS receiving portion 41, the vehicle speed sensor 42, and the gyroscopic sensor 43, and is considered to be the start position of the curve segment. Since the vehicle position at the timing of the steering operation uses the same system of units as the evaluation object value that specifies the start position of the curve segment, the vehicle position at the timing of the steering operation is set as a measurement value and stored in the storage medium 30 as measurement value information 30b.

Alternatively, the control unit 20 uses the processing of the measurement value acquisition unit 21b to identify a lateral acceleration Gt of the vehicle by receiving the output signal of the acceleration sensor 45, and to identify a vehicle speed v by receiving the output signal of the vehicle speed sensor 42. Based on the lateral acceleration Gt and the vehicle speed v, a curvature (Gt/v²) is acquired as a measurement value and stored in the storage medium 30 as measurement value information 30b. In other words, the system of units for the curvature is different from that for the lateral acceleration Gt and the vehicle speed v, which are sensor output values. Therefore, the sensor output values are converted to the same system of units as the curvature, which is an evaluation object value, and used as the measurement value. Note that the measurement value information 30b is associated with information that specifies the measurement objects. For example, the position of the curve segment is associated with a value that specifies the start position of the curve segment and a value that specifies the curvature.

In the present embodiment, when the vehicle reaches a position where there is a curve segment ahead within a predetermined range, the control unit 20 acquires a measurement value related to the curve segment. Thus, according to the present embodiment, the measurement value is acquired a plurality of times in accordance with the plurality of times the vehicle arrives at the curve segment, and the measurement value is accumulated as the measurement value information 30b.

The reliability evaluation unit 21c is a module that realizes in the control unit 20 a function for selecting a reliability evaluation process (evaluation object value reliability process), and evaluating the reliability of an evaluation object value according to the selected reliability evaluation process. In the present embodiment, which does not show all claimed features, the measurement value is classified in advance into two types depending on a dispersion property thereof. Two types of reliability evaluation processes are defined in advance in accordance with the classification, and stored in the storage medium 30 as evaluation process information 30c. According to the present embodiment, the evaluation process information 30c includes first evaluation process information and second evaluation process information. The first evaluation process information applies to a small dispersion, while the second evaluation process information applies to a large dispersion. The evaluation process information 30c also includes information that specifies a value for a threshold representing a range of the measurement value to be used in the reliability evaluation, an index for evaluating reliability, and a probability for evaluating reliability. Specifically, the values for the threshold, index, and probability in the first evaluation process information are ±10%, a measurement value with the highest probability of being measured, and a first probability N (0≤N≤1), respectively. The values for the threshold, index, and probability in the second evaluation process information are ±30%, a measurement value included between the thresholds, and a second probability M (0≤M≤1), respectively.

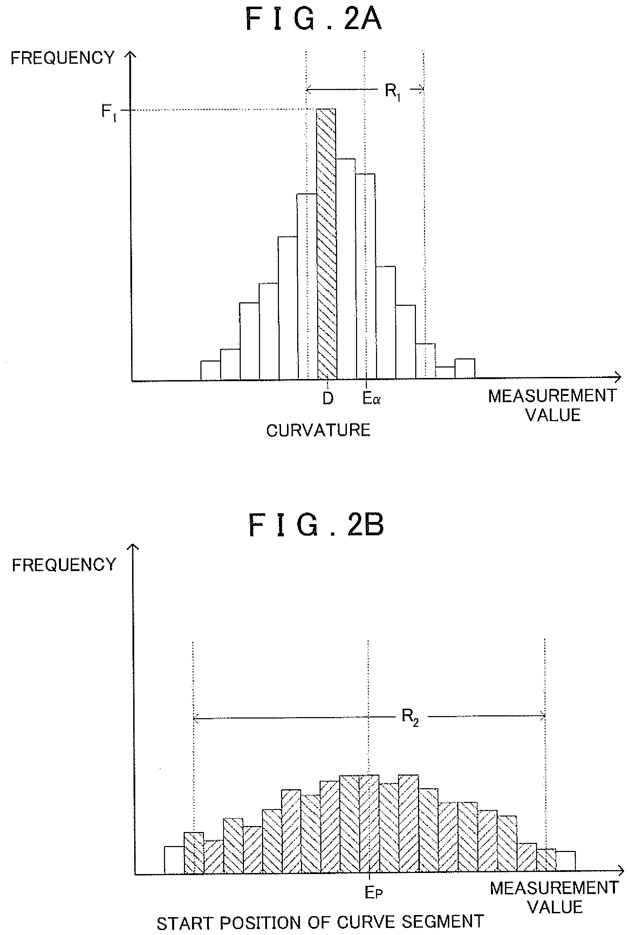

FIGS. 2A and 2B are graphs that show frequency distributions for two types of measurement values, where the horizontal axis represents the measurement value and the vertical axis represents the frequency. FIG. 2A is the frequency distribution of the measurement value for the curvature, and FIG. 2B is the frequency distribution of the measurement value for the start position of the curve segment, wherein the frequency distribution uses a predetermined interval as the unit and uses the number of times the measurement value is measured within each interval as the frequency. As shown in FIGS. 2A and 2B, the frequency distribution of FIG. 2A has a steeper slope compared to the frequency distribution of FIG. 2B, which indicates that the dispersion of the former is smaller than the dispersion of the latter. This dispersion trend is dependent on the property of the measurement object measured by the sensor.

Specifically, the measurement value of the curvature shown in FIG. 2A is found by acquiring the lateral acceleration Gt of the vehicle through the acceleration sensor 45, and the measurement value of the start position of the curve segment shown in FIG. 2B is found by acquiring the current position of the vehicle at the timing at which the driver performs a steering operation through the GPS receiving portion 41 and the like. Here, the lateral acceleration Gt is only indirectly affected by the driver's operation and the timing of the driver's operation is directly detected. The lateral acceleration Gt may be measured within a predetermined time that corresponds to the length of the curve segment, but the timing of the steering operation is only measured in an extremely limited time around the start point of the curve segment. Thus, when the lateral acceleration Gt is acquired a plurality of times, the values tend to converge within a narrow range; however, when the start position of the curve segment identified from the timing of the steering operation is acquired a plurality of times, the values do not tend to converge within a narrow range. Therefore, the dispersion of the curvature found from the lateral acceleration Gt is small, while the dispersion of the start position of the curve segment that is directly affected by the timing of the steering operation is larger than the curvature dispersion. Hence, in the present embodiment, not including all claimed features, the control unit 20 considers the measurement value dispersion to be small if a sensor that directly measures an operation of the driver of the vehicle is not included as a sensor for acquiring the measurement value, and considers the measurement value dispersion to be large if a sensor that directly measures an operation of the driver of the vehicle is included as a sensor for acquiring the measurement value.

The reliability evaluation processes specified by the first and second evaluation process information defined as described above are set so as to evaluate the reliability of the evaluation object value depending on this dispersion property. In other words, a measurement value with which a frequency distribution having a small dispersion can be obtained is distributed in a narrow range. Therefore, the measurement value can be stably measured, and the accuracy of the evaluation object value can be evaluated by directly comparing the measurement value and the evaluation object value. Consequently, for a measurement value with a small dispersion, the measurement value with the highest probability of being measured is assumed to be the actual measurement value of the evaluation object. The control unit 20 thus selects the first evaluation process information from the evaluation process information 30c and evaluates reliability based on the measurement value with the highest probability of being measured.

A measurement value with which a frequency distribution having a large dispersion can be obtained is distributed in a wide range. Therefore, it is difficult to evaluate the evaluation object value based on the measurement value. Instead, the reliability of the evaluation object value is evaluated by treating the measurement value as a set. Consequently, for a measurement value with a large dispersion, the measurement probability of the measurement value being measured within a specific range is considered to be the evaluation index of the actual measurement value of the evaluation object. The control unit 20 thus selects the second evaluation process information from the evaluation process information 30c and evaluates reliability based on the measurement probability of the measurement value being measured within a specific range.

More specifically, in an evaluation using the reliability evaluation process corresponding to a measurement value with a small dispersion, the control unit 20 establishes a range in which a difference between the measurement value and the evaluation object value is within a threshold (a range within ±10% from the evaluation object value) as a first range. If the measurement value with the highest probability of being measured is within the first range from the evaluation object value, and the measurement probability of the measurement value with the highest probability of being measured is equal to or greater than the first probability N, the control unit 20 determines that the reliability of the evaluation object value is high. On the other hand, if the measurement probability of the measurement value with the highest probability of being measured is less than the first probability N, the control unit 20 determines that the reliability of the evaluation object value is low. Note that if there is no measurement value with the highest probability of being measured within the first range, the control unit 20 determines that the reliability of the evaluation object value is low. In other words, if the difference between the measurement value with the highest probability of being measured and the evaluation object value is excessively large, the reliability is evaluated as low.

In an evaluation using the reliability evaluation process corresponding to a measurement value with a large dispersion, the control unit 20 establishes a range in which a difference between the measurement value and the evaluation object value is within a threshold (a range within ±30% from the evaluation object value) as a second range. If the probability of the measurement value within the second range being measured is equal to or greater than the second probability M, the control unit 20 determines that the reliability of the evaluation object value is high. If the probability of the measurement value in a range within ±30% from the evaluation object value being measured is less than the second probability M, the control unit 20 determines that the reliability of the evaluation object value is low. Note that if the measurement probability of the measurement value not within the second range that includes the evaluation object value is higher than the measurement probability of the measurement value within the second range that includes the evaluation object value, the control unit 20 determines that the reliability of the evaluation object value is low. In other words, if there is a high proportion of excessively large differences between the measurement value and the evaluation object value, the reliability is evaluated as low.

Note that because the first range and the second range which specify analysis objects in the reliability evaluation processes are different, different thresholds may also be selected depending on the dispersion. In the present embodiment, the first range is formed so as to be narrower than the second range. Specifically, for a small dispersion, the measurement value is distributed in a relatively narrow range when the measurement value is acquired a plurality of times, whereas for a large dispersion, the measurement value is distributed in a relatively wide range when the measurement value is acquired a plurality of times. Therefore, a narrow range may be used as the analysis object in the case of the former, and a wide range may be used as the analysis object in the case of the latter. According to this configuration, the reliability evaluation process can be selected with the measurement value of a suitable range depending on the measurement value dispersion used as the analysis object.

The first and second probabilities may be set to any value provided that the reliability is high if the value to be compared to each probability exceeds the first probability or the second probability, and the reliability is low if the probabilities are not exceeded. Therefore, the first and second probabilities may be set depending on the precision of required information in the map information 30a. Note that reliability is information that specifies the degree of accuracy of an evaluation object value, and is defined such that a higher reliability means a smaller negative effect on the vehicle when the evaluation object value is used in a vehicle control. According to the present embodiment, an evaluation object value with a relatively small allowable margin of error is set such that the first and second ranges are narrow and the first and second probabilities are large compared to an evaluation object value with a relatively large allowable margin of error. Thus, it is possible to consider an evaluation object value that includes a margin of error as the correct value and evaluate reliability depending on the magnitude of the effect on driving when the vehicle control is performed.

Further, in the present embodiment, the measurement value distribution is evaluated in terms of the frequency distribution. Therefore, the measurement value is analyzed per predetermined interval and the number of measurement values contained in each interval is the frequency. Thus, the measurement probability of the measurement values and the measurement value with the highest probability of being measured are evaluated for each interval. For example, the measurement probability of the measurement values contained in a certain interval is the frequency of that particular interval divided by the overall frequency, and the measurement value with the highest probability of being measured is the median value of the interval that includes the measurement value with the highest probability of being measured in the frequency distribution.

The control unit 20 uses the processing of the reliability evaluation unit 21c to select the reliability evaluation process in the above manner and evaluate the reliability of the evaluation object value based on the measurement value in accordance with the selected reliability evaluation process. Once the reliability of the evaluation object value is identified, the control unit 20 performs a vehicle control suited to the reliability. Specifically, the vehicle control program 22 is a module that realizes in the control unit 20 a function for controlling the vehicle based on the evaluation object value, and the control content for the control is selected depending on the reliability of the evaluation object value.

In the present embodiment, the control unit 20 uses the processing of the vehicle control program 22 to decelerate the vehicle within a segment that comes after the start position of the curve segment but before the start position of a fixed curvature segment. In such case, the vehicle control is set such that an evaluation object value with higher reliability is accompanied by a higher degree of automatic control, and an evaluation object value with higher reliability is also accompanied by a larger control amount. More specifically, the control unit 20 varies the content of the vehicle control based on the reliability of the start position and the curvature of the curve segment.

For example, if the reliability of the start position of the curve segment is high, the control unit 20 starts decelerating the vehicle when the vehicle reaches the start position of the curve segment. However, if the reliability of the start position of the curve segment is low, the control unit 20 starts decelerating the vehicle when the driver starts to steer according to the output signal of the steering sensor 44. In other words, if the reliability of the start position of the curve segment is high, the deceleration timing is automatically determined based on the map information 30a, but if the reliability of the start position of the curve segment is low, the deceleration timing is determined based on the driver's operation.

If the reliability of the curvature is high, the control unit 20 outputs a control signal to the braking portion 47 to generate a braking force for decelerating the current vehicle speed to a target vehicle speed over the course of traveling from the start position of the curve segment to the start position of the fixed curvature segment. However, if the reliability of the curvature is low, the control unit 20 outputs a control signal to the gear shift portion 46 to control the gear ratio so as to become a preferred gear ratio for decelerating the current vehicle speed to a target vehicle speed over the course of traveling from the start position of the curve segment to the start position of the fixed curvature segment. In other words, if the reliability of the curvature is high, the control unit 20 actually applies a deceleration to the vehicle for slowing the current vehicle speed to the target vehicle speed, but if the reliability of the curvature is low, the control unit 20 performs a control such that the engine brake is applied to the vehicle through gear shifting.

As described above, according to the present embodiment, the reliability of an evaluation object value is evaluated using a reliability evaluation process that is selected depending on the measurement value dispersion. Therefore, when the position of a feature or the like specified in map information is measured, the reliability can be evaluated based on the distribution property of the measurement value. Since the vehicle is controlled in accordance with the reliability of the evaluation object value, the vehicle control is surely executed in most cases, and if an erroneous control happened to be performed, the effect of the erroneous control can be suppressed.

### (2) Vehicle Control Process

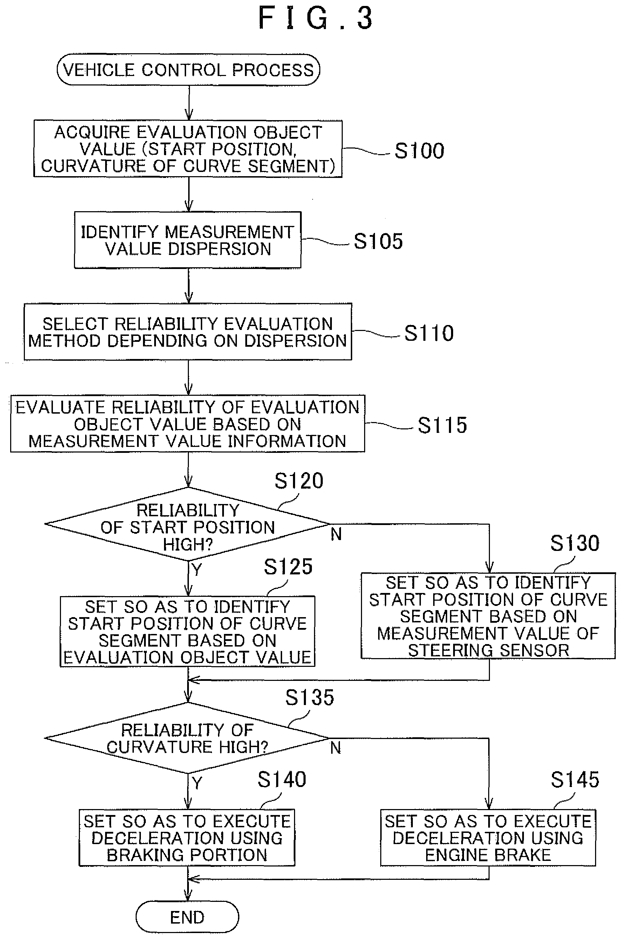

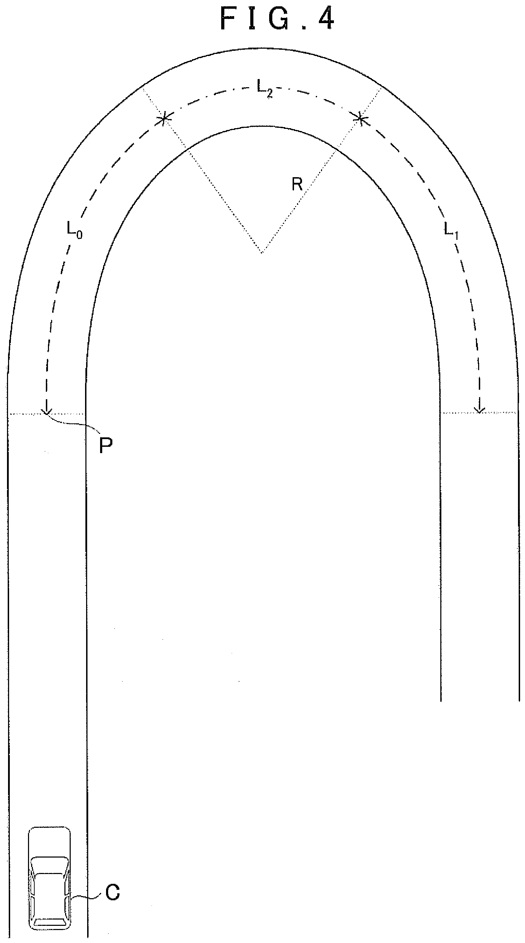

A vehicle control process carried out by the navigation device 10 with the above configuration will be described next based on a flowchart shown in FIG. 3 and a specific example shown in FIG. 4. FIG. 4 is a drawing that shows an example of a curve segment that includes a clothoid curve segment and a fixed curvature segment. Note that, in FIG. 4, arrows L₀, L₁ shown with dotted lines indicate the clothoid segments in front of and behind the fixed curvature segment, and an arrow L₂ shown with a dashed-dotted line indicates the fixed curvature segment. Also, in FIG. 4, the start position of the clothoid segment before reaching the fixed curvature segment is a start position P of the curve segment, and the radius of the fixed curvature segment is indicated as R. Thus, a curvature α is 1/R.

The control unit 20 determines whether there is a curve segment within a predetermined range ahead of the vehicle based on the output signals of the GPS receiving portion 41, the vehicle speed sensor 42, and the gyroscopic sensor 43. If it is determined that there is a curve segment, the control unit 20 executes a measurement value acquisition process and the vehicle control process shown in FIG. 3. Specifically, when the vehicle travels through the curve segment, the control unit 20 uses the processing of the measurement value acquisition unit 21b to measure the start position P and the curvature α of the curve segment. The control unit 20 also performs processing to associate the start position P and the curvature α of the curve segment with information that specifies the position of the curve segment, and stores these in the storage medium 30 as the measurement value information 30b.

Meanwhile, the vehicle control process shown in FIG. 3 is initiated before the vehicle arrives at the curve segment, and the control unit 20 uses the processing of the evaluation object value acquisition unit 21a to reference the map information 30a and acquire the evaluation object value (S100). Specifically, the control unit 20 references the map information 30a for the curve segment that exists within a predetermined range ahead of a vehicle C, and acquires information that specifies the start position P of the curve segment and the curvature α of the curve segment.

Next, the control unit 20 uses the processing of the reliability evaluation unit 21c to identify the dispersion of the measurement value (S105). In the present embodiment, which does not show all claimed features, the control unit 20 determines whether a sensor that measures an operation of the driver of the vehicle is included as a sensor for acquiring the measurement value of the evaluation object. If a sensor that directly measures an operation of the driver is not included, the control unit 20 considers the measurement value dispersion to be small; if a sensor that directly measures an operation of the driver is included, the control unit 20 considers the measurement value dispersion to be large. In the example shown in FIGS. 3 and 4, the steering sensor 44 that directly measures the driver's steering operation must be used in order to identify the start position P of the curve segment. Therefore, the measurement value dispersion for the start position of the curve segment is considered to be large. The curvature α is identified based on the measurement value of the acceleration sensor 45 that measures the lateral acceleration of the vehicle. Therefore, no sensor that directly measures an operation of the driver is included as a sensor for acquiring the measurement value of the curvature α, and the dispersion is considered to be small.

Next, the control unit uses the processing of the reliability evaluation unit 21c to select a reliability evaluation process depending on the dispersion (S110), and evaluates the reliability of the evaluation object value (S115). Specifically, the control unit 20 references the second evaluation process information with regard to the start position P of the curve segment, for which the measurement value is considered to have a large dispersion, and defines the second range that includes the evaluation object value based on a predetermined threshold (±30%). The control unit 20 then acquires the measurement value information 30b to obtain a sum S₁ of the frequencies of the measurement values included in the second range, a sum S₂ of the frequencies of the measurement values not included in the second range, and a sum S₀ of the frequencies of all the measurement values. In FIG. 2B, E_{P} indicates the evaluation object value and an arrow R₂ shown with a solid line indicates the second range. The sum S₁ is the sum of the hatched frequencies, and the sum S₂ is the sum of the non-hatched frequencies, where S₀=S₁+S₂.

Further, the control unit 20 compares the measurement probability of the measurement values not included in the second range (S₂/S₀) and the measurement probability of the measurement values included in the second range (S₁/S₀). If the measurement probability of the measurement values not included in the second range is higher, the reliability of the evaluation object value E_{P} is considered to be low. If the measurement probability of the measurement values not included in the second range is lower, the control unit 20 further determines whether the measurement probability of the measurement values included in the second range is equal to or greater than the second probability M. If the measurement probability of the measurement values included in the second range is equal to or greater than the second probability M, the reliability is considered to be high. However, if the measurement probability of the measurement values included in the second range is less than the second probability M, the reliability is considered to be low.

Meanwhile, with regard to the curvature α, for which the measurement value is considered to have a small dispersion, the control unit 20 defines the first range based on a predetermined threshold (±10%). The control unit 20 then acquires the measurement value information 30b to identify the measurement value with the highest measurement probability (the measurement value with the maximum frequency), and obtains a frequency F₁ of a measurement value D with the highest measurement probability and a sum F₀ of all frequencies. In FIG. 2A, E_{α} indicates the evaluation object value and an arrow R₁ shown with a solid line indicates the first range. The frequency of the measurement value D is shown with hatching. Note that, in the frequency distribution shown by a bar graph in FIG. 2A, the measurement value D is a median value in the horizontal axis direction of the bar that indicates a maximum distribution quantity.

If the measurement value D with the highest measurement probability is not included within the first range, the control unit 20 determines that the reliability of the evaluation object value E_{α} is low. If the measurement value D with the highest measurement probability is included in the first range, the control unit 20 further determines whether the measurement probability (F₁/F₀) of the measurement value D with the highest measurement probability is equal to or greater than the first probability N. If the measurement probability of the measurement value included in the first range is equal to or greater than the first probability N, the reliability is considered to be high. However, if the measurement probability of the measurement values included in the first range is less than the first probability N, the reliability is considered to be low.

After the control unit 20 identifies the reliability of the start position P and the curvature α of the curve segment as described above, the control unit 20 uses the processing of the vehicle control program 22 to determine whether the reliability of the start position P of the curve segment is high (S120). If it is determined at S120 that the reliability of the start position P of the curve segment is high, the control unit 20 sets the vehicle control so as to identify the start position P of the curve segment based on the evaluation object value (S125). However, if it is determined at S120 that the reliability of the start position P of the curve segment is not high, the control unit 20 sets the vehicle control so as to identify the start position P of the curve segment based on the measurement value of the steering sensor 44 (S130).

The control unit 20 then uses the processing of the vehicle control program 22 to determine whether the reliability of the curvature α is high (S135). If it is determined at S135 that the reliability of the curvature α is high, the control unit 20 sets the vehicle control so as to execute a deceleration control using the braking portion 47 (S140). However, if it is determined at S135 that the reliability of the curvature α is not high, the control unit 20 sets the vehicle control so as to perform auxiliary deceleration using the engine brake (S 145). In other words, once the vehicle arrives at the start position P of the curve segment identified in accordance with the setting at S125 or S130, the control unit 20 executes deceleration using the braking portion 47 or auxiliary deceleration using the engine brake in accordance with the setting at S140 or S145. More specifically, if the vehicle control is set so as to execute deceleration using the braking portion 47, a control signal is output to the braking portion 47 once the vehicle reaches the start position P of the curve segment, and a deceleration control is performed that generates a braking force for decelerating the current speed of the vehicle to a target vehicle speed within a distance spanning from the start position P of the curve segment to the start position of the fixed curvature segment. If the vehicle control is set so as to execute auxiliary deceleration using the engine brake, a control signal is output to the gear shift portion 46 once the vehicle reaches the start position P of the curve segment, and the gear ratio is controlled so as to become a preferred gear ratio for decelerating the current speed of the vehicle to a target vehicle speed within a distance spanning from the start position P of the curve segment to the start position of the fixed curvature segment.

### (3) Other Embodiments

The present embodiment described above is only one example for practicing the present invention, and various other embodiments may also be used so long as they select a reliability evaluation process depending on a measurement value dispersion and evaluate the reliability of an evaluation-target value. For example, the processing procedure is not limited to the procedure shown in FIG. 3, and may store a measurement value after performing the vehicle control as measurement value information 30b in the storage medium 30.

The object that is controlled based on the reliability of the evaluation object value is not limited to the braking portion and the gear shift portion; a throttle control portion or the like may be used to perform an acceleration control of the vehicle. Further, the deceleration control may combine controls for the braking portion, the gear shift portion, and the throttle control portion. Specifically, the deceleration control may be configured such that an evaluation object value with a higher reliability is accompanied by the use of a larger control amount (degree of deceleration and the like) by the combination of controls.

The evaluation object value is a value that can be measured by a sensor installed in the vehicle, and is also information that is stored in the storage medium in advance as part of the map information. Therefore, the evaluation object value may be any value that pertains to a feature or the like that forms the map information, and the evaluation object value is not limited to the start position and the curvature of a curve segment as described above. For example, the evaluation object value may identify the position of a feature such as a stop line, or a size or amount such as the road width. The evaluation object value may also express a specific meaning such as a flag that indicates the existence of a feature.

The measurement value may be found based on various sensors, and a camera or the like for measuring the position, speed, acceleration and the like of the vehicle or a feature on the road through image analysis may be used as a sensor of the present invention.

Alternatively, a combination of reliability evaluation processes may be selected depending on the dispersion, or a specific reliability evaluation process may be selected. For example, depending on the measurement value dispersion, either of the following two reliability evaluation processes may be selected: a reliability evaluation process that evaluates reliability based on the difference between the measurement value with the highest probability of being measured and the evaluation object value; and a reliability evaluation process that evaluates reliability based on the probability that a measurement value is measured in a range where a difference between the measurement value and the evaluation object value is equal to or greater than a predetermined value. In such a configuration, the former reliability evaluation process may form all or part of a reliability evaluation process that corresponds to a small dispersion, and the latter reliability evaluation process may form all or part of a reliability evaluation process that corresponds to a large dispersion.

If the reliability of the evaluation object value is low, the dispersion is small, and the measurement probability of the measurement value with the highest probability of being measured is equal to or greater than a predetermined value, a value that specifies the evaluation object may be identified based on the measurement value with the highest probability of being measured, and the evaluation object value in the map information may be updated using the identified value. This configuration can be realized, for example, by adding a map information update unit to the reliability evaluation program 21 shown in FIG. 1 which updates an evaluation object value whose reliability is low. Specifically, if it is determined that the reliability of the evaluation object value is low, the control unit 20 uses the processing of the map information update unit to determine whether the dispersion of the measurement value that measured the evaluation object specified by the evaluation object value is small. If it is determined that the measurement value dispersion is small, the control unit 20 acquires the measurement probability of the measurement value with the highest probability of being measured and determines whether the measurement probability is equal to or greater than a predetermined value. If the measurement probability of the measurement value with the highest probability of being measured is equal to or greater than the predetermined value, the evaluation object value of the map information 30a is updated using the measurement value. With this configuration, the reliability of the map information can be increased.

## Claims

1. A reliability evaluation device comprising:
an evaluation object value acquisition unit (21a) that is adapted to acquire from map information (30a) an evaluation object value (Ep, Eα) whose reliability is to be evaluated , wherein the map information (30a) is stored in a storage medium (30) which is installed in a vehicle (C);
a measurement value acquisition unit (21b) that is adapted to acquire a measurement value (D) a plurality of times for measuring the evaluation object value (Ep, Eα) using a sensor (41-45) installed in the vehicle (C); and
a reliability evaluation unit (21c) that is adapted to select, depending on a dispersion of the acquired measurement values (D) for measuring the evaluation object value, one reliability evaluation process for evaluating the reliability of the evaluation object value (Ep, Eα) based on the acquired measurement values (D) from a plurality of reliability evaluation processes that are defined in advance, and is adapted to evaluate the reliability of the evaluation object value (Ep, Eα) based on the acquired measurement values (D) using the selected reliability evaluation process.

2. The reliability evaluation device according to claim 1, wherein
each reliability evaluation process evaluates the reliability by referencing the measurement value (D) whose difference with the evaluation object value (Ep, Eα) is within a predetermined threshold (R₁, R₂), wherein
the plurality of the reliability evaluation processes are defined in advance with different predetermined thresholds (R₁, R₂), and
the reliability evaluation unit (21c) is adapted to select the reliability evaluation process from the plurality of reliability evaluation processes depending on the measurement value dispersion.

3. The reliability evaluation device according to claim 1 or 2, wherein
the reliability evaluation unit (21c) is adapted to select the reliability evaluation process for evaluating the reliability by referencing the measurement value (D) in a narrower range for a smaller measurement value dispersion.

4. The reliability evaluation device according to one of claims 1 to 3, wherein
the reliability evaluation unit (21c), depending on the measurement value dispersion, is adapted to select one of
a first reliability evaluation process that evaluates the reliability based on a first probability, the first probability being a probability of measuring the measurement value (D) with the highest probability of being measured, if the measurement value (D) with the highest probability of being measured exists within a first range (R₁) from the evaluation object value (Eα), and
a second reliability evaluation process that evaluates the reliability based on a second probability, the second probability being a probability of measuring the measurement value within a second range that includes the evaluation object value (Ep).

5. The reliability evaluation device according to any one of claims 1 to 3, wherein
the reliability evaluation unit (21c), depending on the measurement value dispersion, is adapted to select one of
a first reliability evaluation process that evaluates the reliability based on a difference between the measurement value (D) with the highest probability of being measured and the evaluation object value (Eα), and
a second reliability evaluation process that evaluates the reliability based on a probability that the measurement value is measured in a range where a difference between the measurement value and the evaluation object value (Eα, Ep) is equal to or greater than a predetermined value.

6. The reliability evaluation device according to any one of claims 1 to 5, wherein
the reliability evaluation unit (21c) is adapted to determine the measurement value dispersion when a sensor (44) that measures an operation of a driver of the vehicle (C) is not included as a sensor for acquiring the measurement value as smaller than the measurement value dispersion when a sensor (44) that measures an operation of the driver of the vehicle (C) is included.

7. The reliability evaluation device according to any one of claims 1 to 6, wherein
the reliability evaluation unit (21c) is adapted to acquire the measurement value dispersion based on the measurement value acquired a plurality of times.

8. The reliability evaluation device according to any one of claims 1 to 7, further comprising:
a map information update unit that, if the reliability is low, the dispersion is small, and the measurement probability of the measurement value with the highest probability of being measured is equal to or greater than a predetermined value, is adapted to identify the measurement value (D) with the highest probability of being measured and is adapted to update the evaluation object value (Ep, Eα) in the map information using the measurement value (D).

9. A reliability evaluation method comprising the steps of:
acquiring from map information (30a) an evaluation object value (Ep, Eα) whose reliability is to be evaluated, wherein the map information (30a) is stored in a storage medium (30) installed in a vehicle (C);
acquiring a measurement value (D) a plurality of times for measuring the evaluation object value (Ep, Eα) using a sensor (41-45) installed in the vehicle (C); and
depending on a dispersion of the acquired measurement values (D), selecting one reliability evaluation process for evaluating the reliability of the evaluation object value (Ep, Eα) based on the acquired measurement values (D) from a plurality of the reliability evaluation processes that are defined in advance, and evaluating the reliability of the evaluation object value (Ep, Eα) based on the acquired measurement values (D) using the selected reliability evaluation process.

10. The reliability evaluation method according to claim 9, wherein
the evaluation step evaluates the reliability by referencing the measurement values (D) whose difference with the evaluation object value (Ep, Eα) are within a predetermined threshold (R₁, R₂),
the plurality of the reliability evaluation processes are defined in advance with different predetermined thresholds (R₁, R₂), and
the selecting step selects the reliability evaluation process from the plurality of reliability evaluation processes depending on the measurement value dispersion.

11. The reliability evaluation method according to claim 9 or 10, wherein
the selecting step selects the reliability evaluation process for evaluating the reliability by referencing the measurement values (D) in a narrower range for a smaller measurement value dispersion.

12. The reliability evaluation method according to one of claims 9 to 11, wherein
the selecting step selects, depending on the measurement value dispersion, one of
a first reliability evaluation process that evaluates the reliability based on a first probability, the first probability being a probability of measuring the measurement value (D) with the highest probability of being measured, if the measurement value (D) with the highest probability of being measured exists within a first range (R₁) from the evaluation object value (Eα), and
a second reliability evaluation process that evaluates the reliability based on a second probability, the second probability being a probability of measuring the measurement value within a second range that includes the evaluation object value (Ep).

13. The reliability evaluation method according to any one of claims 9 to 11, wherein
the selecting step selects, depending on the measurement value dispersion, one of
a first reliability evaluation process that evaluates the reliability based on a difference between the measurement value (D) with the highest probability of being measured and the evaluation object value (Eα), and
a second reliability evaluation process that evaluates the reliability based on a probability that the measurement value is measured in a range where a difference between the measurement value and the evaluation object value (Eα, Ep) is equal to or greater than a predetermined value.

14. A reliability evaluation program comprising program code which, when run on a computer causes the computer to perform the steps of a method according to any one of claims 9 to 13.

## Patentansprüche

1. Einrichtung zur Zuverlässigkeitsbewertung, mit:
einer Bewertungszielwert-Erfassungseinheit (21a), die zum Erfassen eines Bewertungszielwerts (Ep, Eα), dessen Zuverlässigkeit zu bewerten ist, aus Karteninformationen (30a) angepasst ist, bei der die Karteninformationen (30a) in einem Speichermedium (30) gespeichert sind, das in einem Fahrzeug (C) installiert ist;
einer Messwert-Erfassungseinheit (21b), die zum Erfassen eines Messwerts (D) mehrmals zum Messen des Bewertungszielwerts (Ep, Eα) unter Verwendung eines Sensors (41 - 45) angepasst ist, der in dem Fahrzeug (C) installiert ist; und
einer Zuverlässigkeitsbewertungseinheit (21c), die angepasst ist zum Auswählen, abhängig von einer Verteilung der erfassten Messwerte (D) zum Messen des Bewertungszielwerts, eines Zuverlässigkeitsbewertungsprozesses zum Bewerten der Zuverlässigkeit des Bewertungszielwerts (Ep, Eα) basierend auf den erfassten Messwerten (D) aus einer Vielzahl von Zuverlässigkeitsbewertungsprozessen, die im Voraus definiert werden, und angepasst ist zum Bewerten der Zuverlässigkeit des Bewertungszielwerts (Ep, Eα) basierend auf den erfassten Messwerten (D) unter Verwendung des ausgewählten Zuverlässigkeitsbewertungsprozesses.

2. Einrichtung zur Zuverlässigkeitsbewertung nach Anspruch 1, bei der
jeder Zuverlässigkeitsbewertungsprozess die Zuverlässigkeit bewertet durch Referenzieren des Messwerts (D), dessen Unterschied zu dem Bewertungszielwert (Ep, Eα) innerhalb eines vorgegebenen Schwellenwerts (R₁, R₂) liegt, bei der
die Vielzahl von Zuverlässigkeitsbewertungsprozessen im Voraus mit verschiedenen vorgegebenen Schwellenwerten (R₁, R₂) definiert werden, und
die Zuverlässigkeitsbewertungseinheit (21 c) angepasst ist zum Auswählen des Zuverlässigkeitsbewertungsprozesses aus der Vielzahl von Zuverlässigkeitsbewertungsprozessen abhängig von der Messwertverteilung.

3. Einrichtung zu Zuverlässigkeitsbewertung nach Anspruch 1 oder 2, bei der die Zuverlässigkeitsbewertungseinheit (21c) angepasst ist zum Auswählen des Zuverlässigkeitsbewertungsprozesses zum Bewerten der Zuverlässigkeit für eine kleinere Messwertverteilung durch Referenzieren des Messwerts (D) in einem engeren Bereich.

4. Einrichtung zur Zuverlässigkeitsbewertung nach einem der Ansprüche 1 bis 3, bei der
die Zuverlässigkeitsbewertungseinheit (21c), abhängig von der Messwertverteilung, angepasst ist zum Auswählen eines aus
einem ersten Zuverlässigkeitsbewertungsprozess, der die Zuverlässigkeit basierend auf einer ersten Wahrscheinlichkeit bewertet, wobei die erste Wahrscheinlichkeit eine Wahrscheinlichkeit ist zum Messen des Messwerts (D) mit der höchsten Wahrscheinlichkeit, gemessen zu werden, wenn der Messwert (D) mit der höchsten Wahrscheinlichkeit, gemessen zu werden, innerhalb eines ersten Bereichs (R₁) aus dem Bewertungszielwert (Eα) vorliegt, und
einem zweiten Zuverlässigkeitsbewertungsprozess, der die Zuverlässigkeit bewertet basierend auf einer zweiten Wahrscheinlichkeit, wobei die zweite Wahrscheinlichkeit eine Wahrscheinlichkeit zum Messen des Messwerts innerhalb eines zweiten Bereichs ist, der den Bewertungszielwert (Ep) aufweist.

5. Einrichtung zur Zuverlässigkeitsbewertung nach einem der Ansprüche 1 bis 3, bei der
die Zuverlässigkeitsbewertungseinheit (21c), abhängig von der Messwertverteilung, angepasst ist zum Auswählen eines aus
einem ersten Zuverlässigkeitsbewertungsprozess, der die Zuverlässigkeit basierend auf einem Unterschied zwischen dem Messwert (D) mit der höchsten Wahrscheinlichkeit, gemessen zu werden, und dem Bewertungszielwert (Eα) bewertet, und
einem zweiten Zuverlässigkeitsbewertungsprozess, der die Zuverlässigkeit basierend auf einer Wahrscheinlichkeit bewertet, dass der Messwert in einem Bereich gemessen wird, in dem ein Unterschied zwischen dem Messwert und dem Bewertungszielwert (Ep, Eα) gleich oder größer als ein vorgegebener Wert ist.

6. Einrichtung zur Zuverlässigkeitsbewertung nach einem der Ansprüche 1 bis 5, bei der
die Zuverlässigkeitsbewertungseinheit (21c) angepasst ist zum Bestimmen der Messwertverteilung, wenn ein Sensor (44), der einen Zustand eines Fahrers des Fahrzeugs (C) misst, nicht als ein Sensor zum Erfassen des Messwerts enthalten ist, als kleiner als die Messwertverteilung, wenn ein Sensor (44), der einen Zustand des Fahrers des Fahrzeugs (C) misst, enthalten ist.

7. Einrichtung zur Zuverlässigkeitsbewertung nach einem der Ansprüche 1 bis 6, bei der
die Zuverlässigkeitsbewertungseinheit (21c) angepasst ist zum Erfassen der Messwertverteilung basierend auf dem Messwert, der mehrmals erfasst wird.

8. Einrichtung zur Zuverlässigkeitsbewertung nach einem der Ansprüche 1 bis 7, ferner mit:
einer Karteninformationen-Aktualisierungseinheit, die, wenn die Zuverlässigkeit gering ist, die Verteilung klein ist, und die Messwahrscheinlichkeit des Messwerts mit der höchsten Wahrscheinlichkeit, gemessen zu werden, gleich oder größer als ein vorgegebener Wert ist, angepasst ist zum Identifizieren des Messwerts (D) mit der höchsten Wahrscheinlichkeit, gemessen zu werden, und angepasst ist zum Aktualisieren des Bewertungszielwerts (Ep, Eα) in den Karteninformationen unter Verwendung des Messwerts (D).

9. Verfahren zu Zuverlässigkeitsbewertung, mit den Schritten:
Erfassen eines Bewertungszielwerts (Ep, Eα), dessen Zuverlässigkeit zu bewerten ist, aus Karteninformationen (30a), wobei die Karteninformationen (30a) in einem Speichermedium (30) gespeichert sind, das in einem Fahrzeug (C) installiert ist;
Erfassen eines Messwerts (D) mehrmals zum Messen des Bewertungszielwerts (Ep, Eα) unter Verwendung eines Sensors (41 - 45), der in dem Fahrzeug (10) installiert ist; und
abhängig von einer Verteilung der erfassten Messwerte (D), Auswählen eines Zuverlässigkeitsbewertungsprozesses zum Bewerten der Zuverlässigkeit des Bewertungszielwerts (Ep, Eα) basierend auf den erfassten Messwerten (D) aus einer Vielzahl der Zuverlässigkeitsbewertungsprozesse, die im Voraus definiert werden, und Bewerten der Zuverlässigkeit des Bewertungszielwerts (Ep, Eα) basierend auf den erfassten Messwerten (D) unter Verwendung des ausgewählten Zuverlässigkeitsbewertungsprozesses.

10. Verfahren zur Zuverlässigkeitsbewertung nach Anspruch 9, bei dem
der Bewertungsschritt die Zuverlässigkeit durch Referenzieren des Messwerts (D) bewertet, dessen Unterschied zu dem Bewertungszielwert (Ep, Eα) innerhalb eines vorgegebenen Schwellenwerts (R₁, R₂) ist,
die Vielzahl der Zuverlässigkeitsbewertungsprozesse im Voraus mit verschiedenen vorgegebenen Schwellenwerten (A1, A2) definiert werden, und
der Auswahlschritt den Zuverlässigkeitsbewertungsprozess aus der Vielzahl von Zuverlässigkeitsbewertungsprozessen abhängig von der Messwertverteilung auswählt.

11. Verfahren zur Zuverlässigkeitsbewertung nach Anspruch 9 oder 10, bei dem der Auswahlschritt den Zuverlässigkeitsbewertungsprozess zum Bewerten der Zuverlässigkeit für eine kleinere Messwertverteilung durch Referenzieren des Messwerts (D) in einem engeren Bereich auswählt.

12. Verfahren zur Zuverlässigkeitsbewertung nach einem der Ansprüche 9 bis 11, bei dem
der Auswahlschritt, abhängig von der Messwertverteilung, eines auswählt aus
einem ersten Zuverlässigkeitsbewertungsprozess, der die Zuverlässigkeit basierend auf einer ersten Wahrscheinlichkeit bewertet, wobei die erste Wahrscheinlichkeit eine Wahrscheinlichkeit ist zum Messen des Messwerts (D) mit der höchsten Wahrscheinlichkeit, gemessen zu werden, wenn der Messwert (D) mit der höchsten Wahrscheinlichkeit, gemessen zu werden, innerhalb eines ersten Bereichs (R₁) aus dem Bewertungszielwert (Eα) vorliegt, und
einem zweiten Zuverlässigkeitsbewertungsprozess, der die Zuverlässigkeit bewertet basierend auf einer zweiten Wahrscheinlichkeit bewertet, wobei die zweite Wahrscheinlichkeit eine Wahrscheinlichkeit zum Messen des Messwerts innerhalb eines zweiten Bereichs ist, der den Bewertungszielwert (Ep) aufweist.

13. Verfahren zu Zuverlässigkeitsbewertung nach einem der Ansprüche 9 bis 11, bei dem
der Auswahlschritt, abhängig von der Messwertverteilung, eines auswählt aus
einem ersten Zuverlässigkeitsbewertungsprozess, der die Zuverlässigkeit basierend auf einem Unterschied zwischen dem Messwert (D) mit der höchsten Wahrscheinlichkeit, gemessen zu werden, und dem Bewertungszielwert (Eα) bewertet, und
einem zweiten Zuverlässigkeitsbewertungsprozess, der die Zuverlässigkeit basierend auf einer Wahrscheinlichkeit bewertet, dass der Messwert in einem Bereich gemessen wird, in dem ein Unterschied zwischen dem Messwert und dem Bewertungszielwert (Ep, Eα) gleich oder größer als ein vorgegebener Wert ist.

14. Programm zur Zuverlässigkeitsbewertung mit einem Programmcode, der, wenn er auf einem Computer läuft, den Computer veranlasst, die Schritte eines Verfahrens nach einem der Ansprüche 9 bis 13 durchzuführen.

## Revendications

1. Dispositif d'évaluation de fiabilité comprenant :
une unité d'acquisition de valeur d'objet d'évaluation (21a) qui est adaptée pour acquérir à partir d'informations de carte (30a) une valeur d'objet d'évaluation (Ep, Eα) dont la fiabilité doit être évaluée, dans lequel les informations de carte (30a) sont stockées dans un support de stockage (30) qui est installé dans un véhicule (C) ;
une unité d'acquisition de valeur de mesure (21b) qui est adaptée pour acquérir une valeur de mesure (D) une pluralité de fois pour mesurer la valeur d'objet d'évaluation (Ep, Eα) à l'aide d'un capteur (41 à 45) installé dans le véhicule (C) ; et
une unité d'évaluation de fiabilité (21c) qui est adaptée pour sélectionner, selon une dispersion des valeurs de mesure (D) acquises pour mesurer la valeur d'objet d'évaluation, un processus d'évaluation de fiabilité pour évaluer la fiabilité de la valeur d'objet d'évaluation (Ep, Eα) sur la base des valeurs de mesure (D) acquises parmi une pluralité de processus d'évaluation de fiabilité qui sont définis à l'avance, et est adaptée pour évaluer la fiabilité de la valeur d'objet d'évaluation (Ep, Eα) sur la base des valeurs de mesure (D) acquises à l'aide du processus d'évaluation de fiabilité sélectionné.

2. Dispositif d'évaluation de fiabilité selon la revendication 1, dans lequel
chaque processus d'évaluation de fiabilité évalue la fiabilité en référençant la valeur de mesure (D) dont une différence avec la valeur d'objet d'évaluation (Ep, Eα) est dans un seuil prédéterminé (R₁, R₂), dans lequel
la pluralité des processus d'évaluation de fiabilité est définie à l'avance avec des seuils prédéterminés (R₁, R₂) différents, et
l'unité d'évaluation de fiabilité (21c) est adaptée pour sélectionner le processus d'évaluation de fiabilité parmi la pluralité de processus d'évaluation de fiabilité selon la dispersion de valeur de mesure.

3. Dispositif d'évaluation de fiabilité selon la revendication 1 ou 2, dans lequel
l'unité d'évaluation de fiabilité (21c) est adaptée pour sélectionner le processus d'évaluation de fiabilité pour évaluer la fiabilité en référençant la valeur de mesure (D) dans une plage plus étroite pour une dispersion de valeur de mesure plus petite.

4. Dispositif d'évaluation de fiabilité selon l'une des revendications 1 à 3, dans lequel
l'unité d'évaluation de fiabilité (21c), selon la dispersion de valeur de mesure, est adaptée pour sélectionner l'un parmi
un premier processus d'évaluation de fiabilité qui évalue la fiabilité sur la base d'une première probabilité, la première probabilité étant une probabilité de mesurer la valeur de mesure (D) avec la probabilité la plus élevée d'être mesurée, si la valeur de mesure (D) avec la probabilité la plus élevée d'être mesurée existe dans une première plage (R₁) de la valeur d'objet d'évaluation (Eα), et
un second processus d'évaluation de fiabilité qui évalue la fiabilité sur la base d'une seconde probabilité, la seconde probabilité étant une probabilité de mesurer la valeur de mesure dans une seconde plage qui inclut la valeur d'objet d'évaluation (Ep).

5. Dispositif d'évaluation de fiabilité selon l'une quelconque des revendications 1 à 3, dans lequel l'unité d'évaluation de fiabilité (21c), selon la dispersion de valeur de mesure, est adaptée pour sélectionner l'un parmi
un premier processus d'évaluation de fiabilité qui évalue la fiabilité sur la base d'une différence entre la valeur de mesure (D) avec la probabilité la plus élevée d'être mesurée et la valeur d'objet d'évaluation (Eα), et
un second processus d'évaluation de fiabilité qui évalue la fiabilité sur la base d'une probabilité selon laquelle la valeur de mesure est mesurée dans une plage où une différence entre la valeur de mesure et la valeur d'objet d'évaluation (Eα, Ep) est supérieure ou égale à une valeur prédéterminée.

6. Dispositif d'évaluation de fiabilité selon l'une quelconque des revendications 1 à 5, dans lequel l'unité d'évaluation de fiabilité (21c) est adaptée pour déterminer la dispersion de valeur de mesure lorsqu'un capteur (44) qui mesure une opération d'un conducteur du véhicule (C) n'est pas inclus en tant que capteur pour acquérir la valeur de mesure plus petite que la dispersion de valeur de mesure lorsqu'un capteur (44) qui mesure une opération du conducteur du véhicule (C) est inclus.

7. Dispositif d'évaluation de fiabilité selon l'une quelconque des revendications 1 à 6, dans lequel l'unité d'évaluation de fiabilité (21c) est adaptée pour acquérir la dispersion de valeur de mesure sur la base de la valeur de mesure acquise une pluralité de fois.

8. Dispositif d'évaluation de fiabilité selon l'une quelconque des revendications 1 à 7, comprenant en outre :
une unité de mise à jour d'informations de carte, qui, si la fiabilité est faible, la dispersion est petite, et la probabilité de mesure de la valeur de mesure avec la probabilité la plus élevée d'être mesurée est supérieure ou égale à une valeur prédéterminée, est adaptée pour identifier la valeur de mesure (D) avec la probabilité la plus élevée d'être mesurée et est adaptée pour mettre à jour la valeur d'objet d'évaluation (Ep, Eα) dans les informations de carte à l'aide de la valeur de mesure (D).

9. Procédé d'évaluation de fiabilité comprenant les étapes de :
acquisition à partir d'informations de carte (30a) d'une valeur d'objet d'évaluation (Ep, Eα) dont la fiabilité doit être évaluée, dans lequel les informations de carte (30a) sont stockées dans un support de stockage (30) installé dans un véhicule (C) ;
acquisition d'une valeur de mesure (D) une pluralité de fois pour mesurer la valeur d'objet d'évaluation (Ep, Eα) à l'aide d'un capteur (41 à 45) installé dans le véhicule (C) ; et
selon une dispersion des valeurs de mesure (D) acquises, sélection d'un processus d'évaluation de fiabilité pour évaluer la fiabilité de la valeur d'objet d'évaluation (Ep, Eα) sur la base des valeurs de mesure (D) acquises parmi une pluralité de processus d'évaluation de fiabilité qui sont définis à l'avance, et évaluation de la fiabilité de la valeur d'objet d'évaluation (Ep, Eα) sur la base des valeurs de mesure (D) acquises à l'aide du processus d'évaluation de fiabilité sélectionné.

10. Procédé d'évaluation de fiabilité selon la revendication 9, dans lequel
l'étape d'évaluation évalue la fiabilité en référençant les valeurs de mesure (D) dont une différence avec la valeur d'objet d'évaluation (Ep, Eα) est dans un seuil prédéterminé (R₁, R₂),
la pluralité des processus d'évaluation de fiabilité est définie à l'avance avec des seuils prédéterminés (R₁, R₂) différents, et
l'étape de sélection sélectionne le processus d'évaluation de fiabilité parmi la pluralité de processus d'évaluation de fiabilité selon la dispersion de valeur de mesure.

11. Procédé d'évaluation de fiabilité selon la revendication 9 ou 10, dans lequel
l'étape de sélection sélectionne le processus d'évaluation de fiabilité pour évaluer la fiabilité en référençant les valeurs de mesure (D) dans une plage plus étroite pour une dispersion de valeur de mesure plus petite.

12. Procédé d'évaluation de fiabilité selon l'une des revendications 9 à 11, dans lequel
l'étape de sélection sélectionne, selon la dispersion de valeur de mesure l'un parmi
un premier processus d'évaluation de fiabilité qui évalue la fiabilité sur la base d'une première probabilité, la première probabilité étant une probabilité de mesurer la valeur de mesure (D) avec la probabilité la plus élevée d'être mesurée, si la valeur de mesure (D) avec la probabilité la plus élevée d'être mesurée existe dans une première plage (R₁) de la valeur d'objet d'évaluation (Eα), et
un second processus d'évaluation de fiabilité qui évalue la fiabilité sur la base d'une seconde probabilité, la seconde probabilité étant une probabilité de mesurer la valeur de mesure dans une seconde plage qui inclut la valeur d'objet d'évaluation (Ep).

13. Procédé d'évaluation de fiabilité selon l'une quelconque des revendications 9 à 11, dans lequel l'étape de sélection sélectionne, selon la dispersion de valeur de mesure, l'un parmi
un premier processus d'évaluation de fiabilité qui évalue la fiabilité sur la base d'une différence entre la valeur de mesure (D) avec la probabilité la plus élevée d'être mesurée et la valeur d'objet d'évaluation (Eα), et
un second processus d'évaluation de fiabilité qui évalue la fiabilité sur la base d'une probabilité selon laquelle la valeur de mesure est mesurée dans une plage où une différence entre la valeur de mesure et la valeur d'objet d'évaluation (Eα, Ep) est supérieure ou égale à une valeur prédéterminée.

14. Programme d'évaluation de fiabilité comprenant un code de programme qui, lorsqu'il est exécuté sur un ordinateur amène l'ordinateur à réaliser les étapes d'un procédé selon l'une quelconque des revendications 9 à 13.
